# EUROPÄISCHE PATENTSCHRIFT

(11) **EP 2 325 068 B1**
(45) Veröffentlichungstag und Bekanntmachung des Hinweises auf die Patenterteilung: **25.01.2012**
(21) Anmeldenummer: 09014517.8
(22) Anmeldetag: 20.11.2009
(51) Int. Cl.: B62D 7/16, F16C 11/06, F16H 7/08, F16H 7/12

(54) **Spannvorrichtung mit verschwenkbarer Gelenkverbindung**
Tensioning device with pivotable articulated link
Dispositif de serrage doté d'une liaison articulée oscillante

(43) Veröffentlichungstag der Anmeldung: 25.05.2011
(73) Patentinhaber: iwis motorsysteme GmbH & Co. KG, 81369 München (DE)
(72) Erfinder: Schachtner, Bernhard, 84381 Johanniskirchen (DE); Hauke, Sebastian, 82140 Olching (DE); Bodensteiner, Martin, 80336 München (DE)
(74) Vertreter: Grünecker, Kinkeldey, Stockmair & Schwanhäusser

(56) Entgegenhaltungen:
- EP-A- 0 407 261
- EP-A- 1 022 487
- DE-A1-102004 047 450

## Beschreibung

Die Erfindung betrifft eine Spannvorrichtung für ein Endlostreibmittel, umfassend einen Spannhebel und einen Spannkolben, gemäß dem Oberbegriff des Anspruchs 1 und wie sie aus der DE102004047450A bekannt ist.

Derartige Spannvorrichtungen werden insbesondere in Steuer- und/oder Nebenaggregatetrieben von Verbrennungsmotoren eingesetzt. In den Steuertrieben wird mittels eines Endlostreibmittels die Bewegung der Kurbelwelle auf die Nockenwelle übertragen. Bei Nebenaggregatetrieben dient das Endlostreibmittel dazu, die Nebenaggregate, d.h. z.B. die Lichtmaschine, den Klimaanlagenkompressor, die Wasserpumpe, Servolenkung usw. anzutreiben. Sowohl in Steuer- als auch in Nebenaggregatetrieben kann hierfür ein Riemen oder eine Kette eingesetzt werden. Die Spannvorrichtung dient dazu, das jeweils eingesetzte Treibmittel auf Spannung zu halten, wodurch eine gleichmäßige Kraftübertragung gewährleistet ist. Insbesondere wird ein sogenanntes Schlagen des Treibmittels verhindert. Dies sorgt für einen gleichmäßigen Antrieb und schont deshalb die Lager der Nockenwelle bzw. Nebenaggregate. Weiter ist eine korrekte Spannung speziell bei Steuertrieben notwendig, um die genau festgelegten Steuerzeiten der einzelnen Ventile einzuhalten und einen einwandfreien Lauf des Motors zu gewährleisten. Zudem könnten Kraftspitzen, die bei ungespanntem Treibmittel auftreten, zu vorzeitigem Verschleiß oder Reißen des Treibmittels führen.

Es ist bekannt, derartige Spannvorrichtungen aus einem Spannhebel und einem Spannelement oder Spannkolben auszubilden. Dabei ist das Spannelement am Spannhebel mittels separater Befestigungselemente angebracht. Üblicherweise werden hierzu Schrauben oder Bolzen genutzt, die eine feste Verbindung zwischen Spannhebel und Spanelement erzeugen. Zur Verbindung des Spannhebels und des Spannkolbens ist ein separates Befestigungselement notwendig. Dies macht einen zusätzlichen Montageschritt notwendig und führt außerdem zu erhöhtem Aufwand in Lagerhaltung und Logistik.

Es ist deshalb Aufgabe der Erfindung, eine Spannvorrichtung bereitzustellen, der die bekannten Nachteile des Standes der Technik löst und insbesondere die Montage der Spannvorrichtung vereinfacht.

Erfindungsgemäß ist eine Spannvorrichtung für ein Endlostreibmittel mit den Merkmalen des Anspruchs 1 vorgesehen.

Der Spannhebel mit der Verbindungspfanne und der dadurch gebildeten Aufnahmeöffnung ist dabei für die Aufnahme des Verbindungskopfes ausgelegt. Bei in die Aufnahmeöffnung eingebrachtem Verbindungskopf umschließt der Randbereich der Aufnahmeöffnung bzw. der Verbindungspfanne den Verbindungskopf zumindest bereichsweise, so dass ein Entfernen des Verbindungskopfes aus der Aufnahmeöffnung ohne Aufbringen einer Kraft nicht möglich ist. Mittels dieser Gestaltung kann die erfindungsgemäße Spannvorrichtung schnell und kostengünstig montiert werden. Insbesondere sind keine weiteren Montageelemente notwendig, um den Spannhebel am Spannkolben zu befestigen. Die Verbindung erfolgt mittels Formschluss, weshalb zusätzliche Montageelemente, wie z.B. Bolzen, unnötig sind. Die Montage erfolgt werkzeuglos, wobei die korrekte Montageposition durch den Monteur sofort erkennbar ist und auch die Funktionsweise sofort überprüft werden kann. Üblicherweise notwendige Montagestationen können entfallen, was zu einer logistischen Vereinfachung der Betriebsabläufe führt.

Eine Möglichkeit zur weiteren Ausgestaltung der erfindungsgemäßen Spannvorrichtung besteht darin, dass die Wirkrichtung des Spannkolbens in einer Längsachse des Spannkolbens verläuft und der Randbereich einen Querschnitt der Aufnahmeöffnung entlang der Längsachse verengt und einen Hinterschnitt bildet, in dem der Verbindungskopf zumindest bereichsweise aufgenommen ist. Mittels des in der Aufnahmeöffnung gebildeten Hinterschnitts kann der darin befindliche Verbindungskopf sicher gehalten werden. Dies gelingt insbesondere dann vorteilhaft, wenn der Randbereich bzw. die Randbereiche symmetrisch zur Längsachse des Spannkolbens angeordnet sind. Die Randbereiche verengen dabei die Öffnung, durch die der Verbindungskopf mit dem Spannkolben verbunden ist. Ein Trennen von Verbindungskopf und Spannkolben ist deshalb bei den üblicherweise im Betrieb auftretenden Kräften und Kraftrichtungen nicht möglich.

Ein weiterer Vorteil ergibt sich, wenn die erfindungsgemäße Spannvorrichtung derart ausgebildet ist, dass der Spannhebel Befestigungsmittel zum schwenkbaren Befestigen an einem Montageträger aufweist. Mittels des Spannhebels können dadurch die Spannkräfte des Spannkolbens übertragen werden. Unter Ausnutzung der Hebelkräfte ist es deshalb möglich, die Spannvorrichtung auch an ungünstigen Positionen zu befestigen. Zudem kann der Spannkolben mit einer geringeren Spannkraft versehen werden, da diese durch die Hebelwirkung vergrößert wird. Als Montageträger kann z.B. ein Motorelement oder der Motorblock dienen.

Weiter kann vorgesehen sein, dass die Gelenkverbindung eine Gelenkkappe und ein Gelenklager mit einem in Längsachse des Spannkolbens im Wesentlichen kreisförmigen Querschnitt umfasst. Mittels der Gelenkkappe und dem Gelenklager wird dabei die verschwenkbare Gelenkverbindung realisiert. Die Gelenkkappe sitzt hierzu verschwenkbar auf dem Gelenklager. Zur Verringerung der notwendigen Gelenkkräfte und zur Erlangung einer kinematisch gleichförmigen Verschwenkbewegung ist das Gelenklager bevorzugt mit einem in Längsachse des Spannkolbens im Wesentlichen kreisförmigen Querschnitt versehen. Entsprechend weist die Gelenkkappe bevorzugt eine im Wesentlichen an den kreisförmigen Querschnitt angepasste Form auf.

Es ist auch möglich, dass der Spannkolben eine Feder umfasst, welche sich mit einem Endbereich an der Gelenkkappe abstützt. Der Spannkolben mit dem Verbindungskopf kann dabei als eine Baueinheit ausgebildet werden, die vollständig zusammengebaut transportiert werden kann. Transport und Montage werden deshalb erleichtert. Zur vollständigen Montage der Spannvorrichtung muss dann lediglich noch der Spannhebel auf den Verbindungskopf aufgebracht werden. Dies kann beispielsweise auch erst direkt vor Einbau der Spannvorrichtung an oder in den Motor erfolgen. Zudem kann die Feder durch die Abstützung an der Gelenkkappe, die bei einem Verschwenken des Verbindungskopfes auftretenden Kräfte aufnehmen und den Verbindungskopf wieder in die ursprüngliche Position verschwenken.

Ein weiterer Vorteil ergibt sich, wenn die Aufnahmeöffnung den im Wesentlichen kreisförmigen Querschnitt des Gelenklagers bis über eine Äquatorebene umfasst. Die Aufnahmeöffnung umschließt dabei den kreisförmigen Querschnitt des Gelenklagers an seinem Bereich mit dem größten oder breitesten Querschnitt und darüber hinaus. Die Verbindungspfanne umfasst demnach den im Wesentlichen kreisförmigen Querschnitt an seiner breitesten Stelle und darüber hinaus bis zu einer Position, an der sich der Querschnitt bereits wieder verengt. Der Verbindungskopf ist dadurch fest in der Aufnahmeöffnung aufgenommen und nur mittels Kraftaufwand aus der Verbindungspfanne zu entfernen.

Weiter kann vorgesehen sein, dass der Verbindungskopf in Verlauf der Längsachse des Spannkolbens in die Aufnahmeöffnung eingebracht ist. Der Verbindungskopf wird dabei in die Verbindungspfanne bzw. die Aufnahmeöffnung eingeschoben oder eingepresst. Durch das Einbringen des Verbindungskopfes im Verlauf der Längsachse des Spannkolbens wird dieses komprimiert, wodurch die aufgebrachte Kraft erhöht wird. Zudem verringert das Einbringen des Verbindungskopfes in Verlauf der Längsachse des Spannelements die Gefahr, dass das Spannkolbens beim Einbringen durch auftretende Querkräfte beschädigt wird.

Denkbar ist auch, dass der Spannhebel zumindest im Bereich der Verbindungspfanne elastisch verformbar ausgestaltet ist. Hierdurch wird das Einbringen des Verbindungskopfes in die Verbindungspfanne erleichtert.

Ebenfalls möglich ist, dass die Verbindungspfanne mindestens eine Queröffnung zu einer Seite des Spannhebels aufweist, so dass der Verbindungskopf seitlich einschiebbar ist. Anstatt des axialen Einschubs in Richtung der Längsachse wird damit das Einbringen des Verbindungskopfes in die Verbindungspfanne quer, also bevorzugt senkrecht zur Längsachse ermöglicht.

Unter Umständen kann auch vorgesehen sein, dass der Verbindungskopf einen in Verlauf der Längsachse des Spannkolbens schwalbenschwanzförmig ausgebildeten Querschnitt aufweist. Der Verbindungskopf mit schwalbenschwanzförmigem Querschnitt ist dabei derart am Spannkolben angebracht, dass der Bereich mit breiterem Querschnitt vom Spannkolben abgewandt liegt, wobei der Bereich mit dem weniger breiten Querschnitt näher am Spannkolben liegt. Ist der Verbindungskopf mit schwalbenschwanzförmig ausgebildetem Querschnitt in die entsprechend komplementär gestaltete Aufnahmeöffnung eingebracht, so ergibt sich eine in Richtung des Spannkolbens enger zulaufende Öffnung der Aufnahmeöffnung, wodurch das breitere Ende des Verbindungskopfes fest in der Aufnahmeöffnung bzw. der Verbindungspfanne gehalten ist.

Alternativ ist denkbar, dass der Gelenkkopf einen in Verlauf der Längsachse des Spannkolbens L-förmigen Querschnitt aufweist, wobei eine mittels des L-förmigen Querschnitts gebildete Zunge zumindest bereichsweise in die Aufnahmeöffnung eingreift und den Randbereich hintergreift. Die L-förmige Zunge ist mit den bekannten Herstellungsverfahren einfach herzustellen. Ebenso ist es einfach möglich eine für die L-förmige Zunge angepasste Aufnahmeöffnung auszugestalten. Es ergibt sich damit eine einfache Herstellung und Montagemöglichkeit für die Spannvorrichtung. Die Aufnahmeöffnung bildet einen Hinterschnitt, in die die Zunge des L-förmigen Querschnitts eingreift und darin gehalten ist.

Als weitere Möglichkeit ist denkbar, dass zwischen Spannhebel und Verbindungskopf eine Verliersicherung positioniert ist, die eine Vorspannung zwischen Spannhebel und Verbindungskopf bewirkt. Die Verliersicherung kann dabei z.B. als Federplättchen ausgebildet sein. Ungewünschte Bewegungen zwischen Spannhebel und Verbindungskopf wie sie z.B. während des Betriebs durch Vibrationen auftreten könne, werden hierdurch vermieden.

Die Spannvorrichtung kann auch derart ausgebildet sein, dass die Verliersicherung integral am Verbindungskopf angeformt ist. Mittels dieser Funktionsintegration kann der Zusammenbau der Spannvorrichtung weiter vereinfacht werden.

Erfindungsgemäß kann die Spannvorrichtung weiter an einem dem Verbindungskopf abgewandten Endbereich des Spannkolbens einen zweiten Verbindungskopf aufweisen. Mittels dieses zweiten Verbindungskopfs besteht die Möglichkeit, die Spannvorrichtung auf einfache Weise z.B. an einem Motorelement zu befestigen.

Die Spannvorrichtung kann auch derart ausgebildet sein, dass das zweite Gelenklager ausgestaltet ist mittels eines Gelenkpartners ein verschwenkbares Gelenk zu bilden. Hierdurch besteht die Möglichkeit, die Spannvorrichtung gelenkig verschwenkbar mit dem zweiten Gelenkpartner auszubilden. Hierdurch werden die Einsatzmöglichkeiten der Spannvorrichtung erhöht.

Weiter umfasst die erfindungsgemäße Lösung der Aufgabe einen Zugmitteltrieb für einen Verbrennungsmotor, umfassend ein Endlostreibmittel, mindestens zwei Treibmittelräder, die in einem vom Endlostreibmittel umschlossenen Bereich angeordnet sind und eine der vorhergehend vorgestellten Spannvorrichtungen und deren alternative Ausführungsformen.

Im Folgenden werden die Ausführungsformen der Erfindung anhand der Zeichnungen näher beschrieben. Es zeigen:
- Fig. 1: eine schematische Schnittdarstellung einer erfindungsgemäßen Spannvorrichtung,
- Fig. 2: eine vergrößerte Darstellung des in Fig. 1 gekennzeichneten Bereichs der schemati- schen Schnittdarstellung,
- Fig. 3: eine schematische Darstellung des Spannhebels aus Fig. 1,
- Fig. 4: eine schematische Schnittdarstellung eines zweiten Ausführungsbeispiels des Ver- bindungsbereichs von Spannhebel und Spannkolben,
- Fig. 5: eine schematische Schnittdarstellung eines weiteren Ausführungsbeispiels durch den Verbindungsbereich von Spannhebel und Spannkolben und
- Fig. 6: eine schematische Schnittdarstellung eines weiteren Ausführungsbeispiels durch den Verbindungsbereich zwischen Spannhebel und Spannkolben.

Die erfindungsgemäße Spannvorrichtung umfasst einen Spannhebel 1 und ein als Spannkolben 2 ausgestaltetes Spannelement. Der Spannkolben 2 weist einen Verbindungskopf 5 auf, welcher ein Gelenklager 3 und eine Gelenkkappe 25 umfasst, die miteinander eine Gelenkverbindung bilden.

Der Spannhebel 1 umfasst einen flügelartigen Bereich, in dem eine erste Öffnung 6 und eine hiervon beabstandete zweite Öffnung 7 eingebracht sind. Erste und zweite Öffnungen 6, 7 verlaufen bevorzugt vollständig durch den Spannhebel 1 hindurch und können beispielsweise als Bohrung ausgebildet sein. Erste und zweite Öffnungen 6, 7 dienen als Befestigungsmittel. Am Spannhebel 1 ist eine Verbindungspfanne 24 angeordnet, die eine Aufnahmeöffnung 4 ausbildet. An der Verbindungspfanne ist mindestens ein Randbereich 35 definiert. Die Verbindungspfanne 24 ist im gezeigten Ausführungsbeispiel integral mit dem Spannhebel 1 ausgebildet. Die Verbindungspfanne 24 kann jedoch ebenso durch ein separates Element, welches am Spannhebel angebracht ist, ausgeführt sein. Der Spannhebel 1 weist eine Aufnahmeöffnung 4 auf, welche durch die Verbindungspfanne 24 ausgebildet ist.

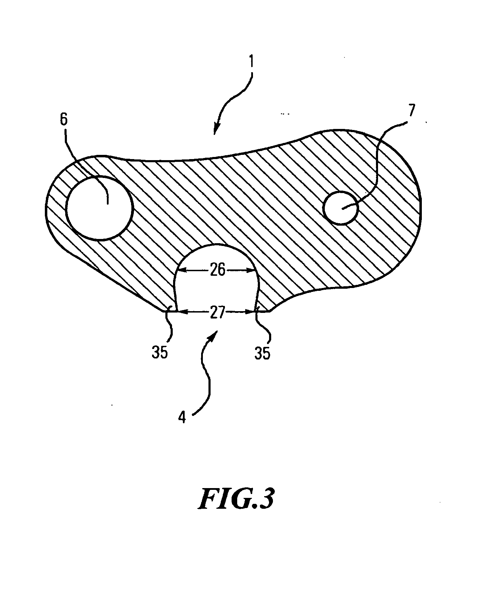

Die Aufnahmeöffnung 4 ist im gezeigten Ausführungsbeispiel (Fig. 3) im Wesentlichen kreisförmig oder zumindest am Außenumfang kreisbogenartig ausgeformt und zu einer Seite des Spannhebels 1 geöffnet. Dabei weist die Aufnahmeöffnung 4 eine erste Öffnungsbreite 26 und eine zweite Öffnungsbreite 27 auf. Die erste Öffnungsbreite 26 ist dabei größer, d.h. breiter, als die zweite Öffnungsbreite 27. Die erste Öffnungsbreite 26 liegt auf der Längsachse 22 weiter vom Spannkolben 2 entfernt als die zweite Öffnungsbreite 27. Die Breite ist dabei definiert als Öffnungsweite der Aufnahmeöffnung 4 quer zu einer Gelenkachse 30, um die eine Verschwenkung im Verbindungskopf 5 erfolgt. Die Aufnahmeöffnung 4 weist also quer zur Gelenkachse 30 eine veränderliche Öffnungsbreite auf. Die Verengung der Aufnahmeöffnung 4, welche durch die geringere Öffnungsweite der zweiten Öffnungsbreite 27 gebildet ist, wird durch mindestens einen Randbereich 35 hervorgerufen, welcher die Aufnahmeöffnung 4 begrenzt. Die Verengung erfolgt dabei symmetrisch zur Längsachse 22. Mittels der Verengung, ergibt sich ein Hinterschnitt in der Aufnahmeöffnung 4. Am Spannhebel 1 kann an der zweiten Öffnung 7 im späteren Anwendungsfall eine Spannrolle befestigt werden, die mit einem Treibmittel in Kontakt gelangt. Die erste Öffnung 6 dient zur Befestigung des Spannhebels 1 an einem Montageträger bzw. am Motorblock.

Der Spannkolben 2 umfasst eine Dämpferanordnung 9 sowie eine Feder 10. Die Feder ist dabei als zylindrische Druckfeder ausgeführt und erstreckt sich um die Dämpferanordnung 9 herum. Die Dämpferanordnung 9 umfasst ein Dämpfergehäuse 11, welches einen bevorzugt zylinderförmigen Innenraum umfasst. Innerhalb des Dämpfergehäuses 11 ist eine Dämpferplatte 12 sowie ein Dämpferkolben 13 positioniert, wobei sich der Dämpferkolben 13 durch eine Gehäusedurchführung 14 aus dem Inneren des Gehäuses herauserstreckt. Die Dämpferplatte 12 unterteilt den vom Dämpfergehäuse 11 umschlossenen Bereich in einen ersten Dämpferraum 15 und einen zweiten Dämpferraum 16. Erster und zweiter Dämpferraum 15,16 sind mit einem inkompressiblen Fluid gefüllt. An oder in der Dämpferplatte sind Durchlassöffnungen für das Dämpferfluid vorgesehen, die eine vorgegebene Fluidstrom aus dem ersten Dämpferraum 15 in den zweiten Dämpferraum 16, und umgekehrt zulassen. An der Dämpferplatte 12 ist der Dämpferkolben 13 befestigt. Alternativ können auch andere Bauarten von Dämpfern genutzt werden, wie z.B. Reibungsdämpfer. Auch ist es denkbar die Feder 10 anders als zuvor genannt anzuordnen. Beispielsweise könnte die Feder 10 auch in einem Innenraum des Dämpfers verbaut sein und direkt auf den Dämpferkolben 13 wirken.

An einem ersten Endbereich 17 des Spannkolbens 2 ist in einem Außenbereich ein erster Federträger 18 angeformt, an welchem sich die Feder 10 abstützt. In der Nähe des zweiten, dem ersten Endbereich 17 des Spannkolbens 2 gegenüberliegendem Endbereich 19 befindet sich ein weiterer Federträger 20, an dem sich der zweite Endbereich der Feder 10 abstützt. Am ersten Endbereich 17 des Spannkolbens 2 ist des Weiteren ein Befestigungselement 21 angeordnet, womit der Spannkolben 2 an einem Element eines Motors befestigt werden kann. Allerdings kann auch auf den zweiten Federträger 20 verzichtet werden. Die Feder 10 stützt sich dann am Spannhebel 1 ab.

Der Dämpferkolben 13 erstreckt sich durch den ersten Dämpferraum 15, mittels der abgedichteten Gehäusedurchführung 14 durch das Dämpfergehäuse 11 in Richtung des zweiten Endbereichs 19 des Spannkolbens 2. Der Spannkolben 2 weist in der gezeigten Ausführungsform eine Längsachse 22 auf, welche im gezeigten Ausführungsbeispiel durch den Dämpferkolben 13 hindurch verläuft. Die Längsachse 22 erstreckt sich somit vom Befestigungselement 21 vom ersten Endbereich 17 durch ersten und zweiten Dämpferraum 15,16 zum zweiten Endbereich 19. Die Wirkrichtung des Spannkolbens 2 verläuft in Richtung der Kraftrichtung der Druckfeder 10, d.h. in Richtung der Längsachse 22. Ist der Spannkolben am unteren Befestigungselement 21 befestigt, so als Wirkrichtung des Spannkolbens also eine Bewegung des Dämpferkolbens 13 und des Verbindungskopfes 5 in Richtung des Spannhebels 1.

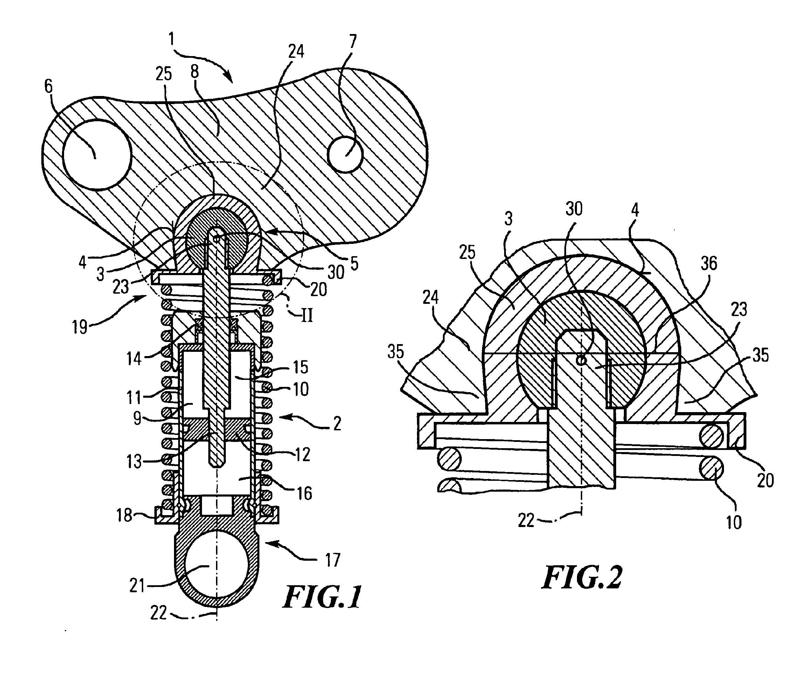

Am Kolbenende 23 des Dämpferkolbens 13 befindet sich der Verbindungskopf 5. Der Verbindungskopf 5 kann dabei einteilig mit dem Dämpferkolben 13 verbunden sein oder integral mit diesem ausgebildet sein. Der Verbindungskopf 5 kann jedoch auch auf sonstige Weise mit dem Dämpferkolben 13 verbunden sein. Der Verbindungskopf 24 weist in der in Fig. 1 gezeigten Ausführungsform ein Gelenklager 3 mit einem kreisförmigen oder walzenförmigen Querschnitt auf. Um das Gelenklager 3 erstreckt sich eine Gelenkkappe 25. Die Gelenkkappe 25 umschließt dabei den Gelenkkopf im Wesentlichen vollständig und weist eine im Wesentlichen identische Innenkontur auf, die im Wesentlichen der Außenkontur des Gelenklagers 3 entspricht. Die Gelenkkappe 25 ist auf dem Gelenklager 3 verschwenkbar gelagert, wodurch sich eine verschwenkbare Gelenkverbindung ergibt. Alternativ kann der Verbindungskopf 5 auch lediglich als Gelenklager 3 ohne aufgesetzte Gelenkkappe 25 ausgebildet sein. In diesem Fall steht das Gelenklager 3 direkt mit der Aufnahmeöffnung 4 in Kontakt und ist relativ zu dieser verschwenkbar. Der zweite Federträger 20 ist im gezeigten Ausführungsbeispiel am Verbindungskopf 5 angebracht oder integral angeformt.

Der Verbindungskopf 5 ist in die Aufnahmeöffnung 4 des Spannhebels 1 eingesetzt. Die Gelenkkappe 25 weist eine z.B. glockenförmige oder kreisbogenförmige Außenform auf. Die Verbindungspfanne 24 weist eine zur Außenkontur der Gelenkkappe 25 im Wesentlichen identische Innenkontur auf. Dabei umschließt der Spannhebel 1 den in die Aufnahmeöffnung 4 eingeführten Verbindungskopf 5 derart, dass der Randbereich 35 zumindest einen Bereich des Verbindungskopfes 5 hintergreift. D.h. die Aufnahmeöffnung 4 weist in einem Bereich eine erste Öffnungsbreite 26 und in einem zweiten Bereich, am Randbereich 35, eine zweite Öffnungsbreite 27 auf, wobei die zweite Öffnungsbreite 27 geringer ist als die erste Öffnungsbreite 26. Bei in die Aufnahmeöffnung 4 eingebrachtem Verbindungskopf 5 wird dieser deshalb mittels der Randbereiche 35 umfasst oder hinterfasst, so dass ein selbständiges Lösen oder Trennen vom Spannhebel 1 verhindert ist.

Der Verbindungskopf 5 kann kugelförmig oder auch walzenförmig gestaltet sein. Dies heißt, dass der Kugelkopf 5 z.B. die Form eines Kugelsektors oder Kugelabschnitts aufweist, der auf dem Dämpferkolben 13 befestigt ist. Bei einer komplementär zum kugelsektorartig geformten Verbindungskopf 5 ausgeformten Aufnahmeöffnung 4 ergeben sich somit eine Vielzahl von Gelenkachsen, um die der Spannhebel 1 relativ zum Spannkolben 2 verschwenkbar ist. Die Hauptgelenkachse 30, um die ein Verschwenken im späteren Anwendungsfall vorgesehen ist, ist jedoch den Figuren zu entnehmen und verläuft parallel zur ersten und zweiten Öffnung 6,7 im Spannhebel 1. Alternativ kann der Verbindungskopf 5 auch walzenförmig gestaltet sein, d.h. der Verbindungskopf 5 weist in der in Fig. 1 gezeigten Schnittebene eine zumindest in einem Bereich kreisbogenförmige Kontur auf, wobei der Verbindungskopf 5 jedoch in Richtung der Gelenkachse 30 z.B. walzenförmig oder nach Art eines Stabes ausgebildet ist. Dies hat den Vorteil, dass der in die Aufnahmeöffnung eingebrachte Verbindungskopf 5 durch seine Formgebung eine Gelenkachse 30 vorgibt, um die der Spannhebel 1 relativ zum Spannkolben 2 verschwenkbar ist.

Entsprechend den vorgenannten Ausführungsformen des Verbindungskopfes 5 sind das Gelenklager 3 und die Gelenkkappe 25 ausgeformt. D.h., das Gelenklager 3 und die Gelenkkappe 25 können sowohl kugelförmig oder auch walzen- oder stangenförmig ausgebildet sein. Im Falle einer stangenförmigen Ausführung kann die Gelenkkappe 25 z.B. nach Art einer Gelenkhülle ausgebildet sein, die seitlich offen ist.

Die Verbindungspfanne 24 umschließt den Verbindungskopf 5 bis über eine Äquatorebene 36 und darüber hinaus. Die Äquatorebene 36 ist dabei diejenige Ebene, die von der Längsachse 22 des Spannkolbens 2 rechtwinklig geschnitten wird und in der die größte Öffnungsbreite des kreis- oder walzenförmigen Querschnitts des Verbindungskopfes liegt. Der Verbindungskopf 5 wird also sowohl in seinem Bereich mit der größten Öffnungsbreite umfasst als auch in einem zweiten Bereich der zwischen dem Bereich mit der größten Öffnungsbreite und dem Dämpfergehäuse 11 liegt.

Im Folgenden wir die Wirkungs- und Funktionsweise der erfindungsgemäßen Spannvorrichtung beschrieben.

Die Feder 10 des Spannkolbens 2 wirkt eine Druckkraft in Richtung der Längsachse 22 des Spannkolbens 2 aus. Die Feder 10 stützt sich dabei am ersten Federträger 18 und am zweiten Federträger 20 auf. Dies bewirkt ein Ausfahren des Dämpferkolbens 13 aus dem Dämpfergehäuse 11. Die Dämpferplatte 12 ist mit dem Dämpferkolben 13 fest verbunden und wird im Inneren des Dämpfergehäuses 11 entlang der Längsachse 22 mit dem Dämpferkolben 13 in Richtung des zweiten Endbereichs 19 verschoben. Dabei verkleinert sich der erste Dämpferraum 15 und vergrößert sich der zweite Dämpferraum 16. Im ersten Dämpferraum 15 befindliches Dämpferfluid wird durch und/oder um die Dämpferplatte 12 in den zweiten Dämpferraum 16 gepresst. Um ein derartiges Ausfahren des Dämpferkolbens 13 zu ermöglichen, ist der zweite Federträger 20 an einem außerhalb des Dämpfergehäuses 11 liegenden Bereichs des Dämpferkolbens 13 angebracht. Durch das Ausfahren des Dämpferkolbens 13 verlängert sich die Gesamtlänge des Spannkolbens 2 entlang der Längsachse 22. Am außerhalb des Dämpfergehäuses 11 liegenden Kolbenende 23 des Dämpferkolbens 13 befindet sich der Verbindungskopf 5. Der Verbindungskopf 5 hat einen kreisförmigen Querschnitt. Der Verbindungskopf 5 umfasst das Gelenklager 3 und die Gelenkkappe 25, wobei die Gelenkkappe 25 auf das Gelenklager 3 aufgesetzt ist. Die Gelenkkappe 25 weist dabei eine Innenkontur auf, die der kreisförmigen Außenkontur oder dem kreisförmigen Querschnitt des Gelenklagers 3 im Wesentlichen entspricht.

Beim Aufschieben der Gelenkkappe 25 auf das Gelenklager 3 ergibt sich deshalb eine Schnappverbindung, d.h. die Gelenkkappe 3 wird geringfügig aufgedehnt, um das Gelenklager 3 in sich aufzunehmen. Die Gelenkkappe 25 weist also elastische Eigenschaften auf und hält das Gelenklager 24. Das Aufschieben der Gelenkkappe 25 auf das Gelenklager 3 erfolgt entlang der Längsachse 22 in Richtung des ersten Endbereichs 17, d.h. entgegen der Wirkrichtung des Spannkolbens 2.

Die Gelenkkappe 25 weist eine kreisförmige oder glockenförmige Außenkontur oder einen kreisförmigen oder glockenförmigen Querschnitt auf. Die Innenkontur der Aufnahmeöffnung 4 weist eine im Wesentlichen der Außenkontur der Gelenkkappe 25 entsprechende Außenkontur auf. Durch diese Formgebung ergibt sich ein Hinterschnitt in der Aufnahmeöffnung 4, weshalb bei Einschieben der Gelenkkappe 25 in die Aufnahmeöffnung 4 eine feste, d.h. nicht von selbst oder sich während des Betriebs lösende Verbindung erfolgt. Die Verbindung erfolgt dabei nach Art einer Schnappverbindung, d.h. beim Einschieben der Gelenkkappe 25 in die Aufnahmeöffnung 4 wird der Spannhebel 1 elastisch verformt und es muss eine Kraft aufgewendet werden. Ist die Gelenkkappe 25 bis zu ihrer Endposition in die Gelenköffnung 4 eingeschoben, so wird die Gelenkkappe 25 mittels eines Hinterschnitts, welcher mittels der Aufnahmeöffnung 4 und den mindestens einen Randbereich 35 gebildet ist, verliersicher gehalten. Alternativ kann (auch) die Gelenkkappe 25 elastisch ausgebildet sein und sich bei Einschieben in die Aufnahmeöffnung 4 elastisch verformen.

Alternativ ist es auch möglich, den Verbindungskopf 5 seitlich in den Spannhebel 1 einzuschieben. Dabei weist der Spannhebel 1 eine seitliche Öffnung auf, die entlang der Gelenkachse 30 verläuft. Der kugel- oder walzenförmig gestaltete Verbindungskopf 5 wird somit entlang der Gelenkachse 30 seitlich in den Spannhebel 1 in die Aufnahmeöffnung 4 eingeschoben. Der Verbindungskopf 5 wird dadurch durch den mindestens einen Randbereich 35 gegen ein Herausziehen in Richtung der Längsachse 22 des Spannkolbens 2 gesichert. Die Aufnahmeöffnung 4 kann sich bei dieser Ausgestaltung sowohl vollständig durch den Spannhebel 1 entlang der Achse 30 erstrecken und zu beiden Seitenwänden des Spannhebels 1 geöffnet sein, als auch lediglich zu einer Seite des Spannhebels 1 offen sein.

Beim Zusammenbau der Spannvorrichtung wird in einem ersten Schritt der Spannkolben 2 zusammengesetzt. Hierzu wird die Feder 10 auf das Dämpfergehäuse 10 aufgeschoben und der Dämpferkolben 13 und die Dämpferplatte 12 in das Dämpfergehäuse 10 eingebracht. Nachdem das Dämpfergehäuse 10 verschlossen wurde, wird auch das Gelenklager 3 die Gelenkkappe 25 aufgesetzt. Dabei stützt sich ein Endbereich der Feder 10 am zweiten Federträger 20, der an der Gelenkkappe 25 angeformt ist, ab. Alle Elemente des Spannkolbens 2 sind damit zueinander fixiert, was den Transport des Spannkolbens 2 vereinfacht. Zur Vervollständigung der Spannvorrichtung wird der Spannhebel 1 auf den Verbindungskopf 5 aufgesetzt. Der gesamte Zusammenbau der Spannvorrichtung geschieht werkzeuglos. Die Verbindung zwischen Spannhebel 1 und Spannkolben 2 wird lediglich mittels Formschluss aufrecht erhalten, wodurch eine werkzeuglose Verbindung ermöglicht ist.

Für die Nutzung der Spannvorrichtung in einem Verbrennungsmotor wird eine Spannrolle an der zweiten Öffnung 7 des Spannhebels 1 montiert. Die Spannvorrichtung kann dann in einem Zugmitteltrieb montiert werden. Die Verbindung des Spannhebels mit dem Motorgehäuse oder einem Montageträger erfolgt an der ersten Öffnung 6 derart, dass ein Verschwenken um die erste Öffnung 6 möglich ist. Der Einsatz der Spannvorrichtung ist sowohl in Verbindung mit einem Ketten- als auch mit einem Riementrieb möglich. Derartige Zugmitteltriebe umfassen in der Regel mindestens ein Endlostreibmittel (wie z.B. eine Kette oder einen Riemen), mindestens zwei Treibmittelräder, die in einem vom Treibmittel umschlossenen Bereich angeordnet sind und eine Spannvorrichtung der beschriebenen Art.

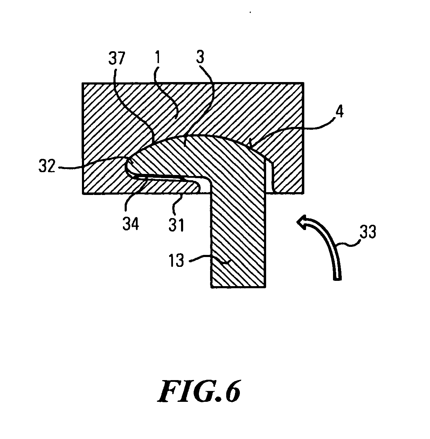

Im Folgenden werden anhand der Fig. 3 bis 6 weitere Ausführungsformen der Spannvorrichtung erläutert. Es soll im Folgenden nur auf die wesentlichen Unterschiede zur vorangegangenen Ausführungsform eingegangen werden, deshalb werden für gleiche und wirkungsgleiche Bauelemente gleiche Bezugsziffern verwendet und entsprechend auf die vorangegangene Beschreibung verwiesen.

Fig. 3 zeigt eine weitere Ausführungsform der erfindungsgemäßen Spannvorrichtung. Der schematisch dargestellte Spannhebel 1 weist eine Gelenköffnung 4 auf. Am Dämpferkolben 13 ist ein Verbindungskopf 5 angeformt. Um den Verbindungskopf 5 herum und von dieser umschlossen, erstreckt sich eine Gelenkkappe 25. Die Gelenkkappe 25 weist dabei Rastbacken 28 auf, die in entsprechende Rastöffnungen 29, welche am Spannhebel 1 ausgeformt sind, eingreifen. Die Rastöffnungen 29 bilden einen Hinterschnitt und sorgen so dafür, dass die Gelenkpfanne 25 verliersicher im Spannhebel 1 gehalten ist.

Zum Zusammenbau der Spannvorrichtung dieser Ausführungsform wird das Gelenklager 3 in die Gelenkkappe 25 eingeschoben. Dabei wird die Gelenkkappe 25 elastisch aufgedehnt, wobei die Gelenkkappe 25 nach Aufnahme des Gelenkkopfes 3 wieder in ihre ursprüngliche Form zurückkehrt. Die Gelenkkappe 25 und Gelenkkopf 3 bilden also eine Schnappverbindung, wobei die Innenkontur der Gelenkkappe 25 einen Hinterschnitt bildet, mittels dessen das Gelenklager 3 in der Gelenkkappe 25 gehalten ist. Die derartig verbundene Gelenkkappe 25 und Gelenklager 3 werden nun in die Aufnahmeöffnung 4 des Spannhebels 1 eingeschoben. Dabei gelangt die Außenkontur der Gelenkkappe 25 zumindest bereichsweise mit der Innenkontur der Aufnahmeöffnung 4 in Kontakt. Der Spannhebel 1 wird beim Einführen der Gelenkkappe 25 mit dem Gelenkkopf 3 elastisch aufgeweitet. Nachdem Gelenkkappe 25 und Gelenklager 3 in die Aufnahmeöffnung 4 eingeführt sind, kehrt der Spannhebel 1 wieder in seine ursprüngliche Form zurück, oder bleibt geringfügig elastisch aufgeweitet um eine Haltekraft auszuüben. Die Rastöffnungen 29, die als Teil der Gelenköffnung 4 ausgebildet sind, bilden mindestens einen Hinterschnitt, in die die Rastbacken 28 der Gelenkkappe 25 einschnappen oder eingreifen. Mittels dieser Gestaltung ist also eine Schnappverbindung gebildet. Die in der Aufnahmeöffnung 4 aufgenommene Gelenkkappe 25 kann nun durch den an der Außenkontur der Gelenkkappe 25 anliegenden Spannhebel 1 nicht mehr elastisch aufgeweitet werden, wodurch der Gelenkkopf 3 verliersicher gehalten ist.

Eine Verschwenkung zwischen Spannhebel 1 und Spannkolben 2 wird in diesem Ausführungsbeispiel durch die verschwenkbare Gelenkverbindung zwischen der Gelenkkappe 25 und dem Gelenklager 3 erzielt. Die Gelenkkappe 25 dieses Ausführungsbeispiels weist keinen zweiten Federträger 20 auf, wie dies im ersten Ausführungsbeispiel gezeigt ist. Vielmehr stützt sich in dieser Ausführungsform die Feder 10 direkt am Spannhebel 1 ab. Eine derartige Gestaltung, d.h. ohne zweiten Federträger 20 mit Abstützung der Feder 10 direkt am Spannhebel 1 wäre auch für die erste Ausführungsform (Fig. 1) möglich.

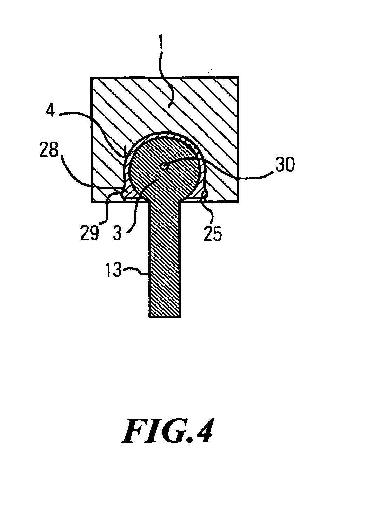

Eine weitere Ausführungsform der erfindungsgemäßen Spannvorrichtung ist in Fig. 4 zu sehen. Die Gelenkverbindung zwischen Spannhebel 1 und Spannkolben 2 geschieht dabei nach Art einer Schwalbenschwanzverbindung. Am Dämpferkolben 13 ist ein Verbindungskopf 5 mit schwalbenschwanzförmigem Querschnitt angebracht oder angeformt. Dabei weist der schwalbenschwanzförmige Verbindungskopf 3 eine konvexe Außenkontur 37 auf, die im Wesentlichen senkrecht zur Längsachse 22 verläuft. Entlang dieser Außenkontur 37 kann der schwalbenschwanzförmige Querschnitt in der Aufnahmeöffnung 4 verschwenkt werden. Die Verbindungspfanne 24 hat eine zum schwalbenschwanzförmigen Verbindungskopf 3 angepasste Innenkontur, um diesen aufzunehmen. Insbesondere ist die Innenkontur der Verbindungspfanne 24 in einem Bereich, der mit der konvexen Außenkontur 37 in Kontakt steht, konkav ausgebildet. Die Aufnahmeöffnung 4 ist geringfügig größer ausgeführt als der schwalbenschwanzförmige Verbindungskopf 5, um eine Verschwenkung des Verbindungskopfs 5 innerhalb der Aufnahmeöffnung 4 zu erlauben. Die Gelenkachse liegt im Mittelpunkt eines Kreises, der durch die bevorzugt kreisbogenförmig ausgebildete konvexe Außenkontur 37 definiert ist. Wie in dem bereits zuvor gezeigten Ausführungsbeispielen weist die Aufnahmeöffnung 4 in einem Bereich eine Öffnungsbreite auf, die größer ist als in einem zweiten Bereich. D.h., innerhalb der Aufnahmeöffnung 4 ist ein Hinterschnitt ausgebildet, der für eine verliersichere Sicherung des Verbindungskopfes 5 sorgt. Im gezeigten Ausführungsbeispiel ist die Aufnahmeöffnung 4 derart geformt, dass ein zerstörungsfreies Entfernen des Verbindungskopfes 3 in Richtung der Längsachse 22 des Spannkolbens 2 nicht möglich ist.

Um den schwalbenschwanzförmigen Verbindungskopf 3 in die Aufnahmeöffnung 4 des Spannhebels 1 einzubringen, weist der Spannhebel 1 eine in Richtung der Gelenkachse 30 verlaufende Einführöffnung auf, die bevorzugt vollständig durch den Spannhebel 1 hindurch verläuft. Der Gelenkkopf 3 wird also durch eine seitliche Öffnung des Spannhebels 1 in Richtung der Gelenkachse 30 in den Spannhebel 1 eingeführt. Anstatt eines schwalbenschwanzförmigen Querschnitts kann der Gelenkkopf 3 alternativ auch z.B. einen T-förmigen Querschnitt aufweisen. In diesem Fall erfolgt das Einbringen des Gelenkkopfes 3 ebenfalls durch eine seitliche Öffnung des Spannhebels 1.

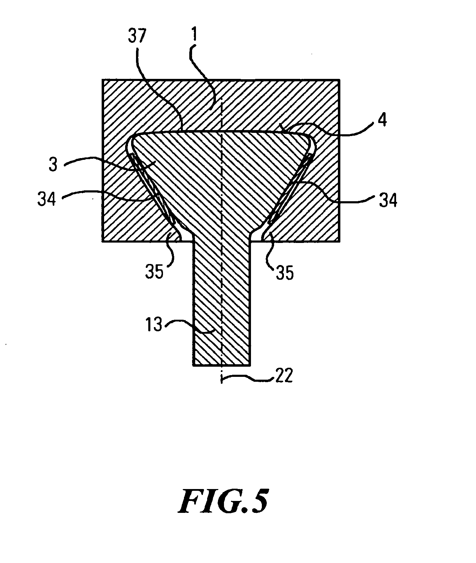

Ein weiteres Ausführungsbeispiel für eine Spannvorrichtung ist in Fig. 5 zu sehen. Der Verbindungskopf 5 ist in dieser Ausführungsform L-förmig oder hakenförmig ausgestaltet. Auch eine halbmondförmige oder sichelförmige Formgebung ist möglich. Eine konvexe Außenkontur 37 des Verbindungskopfes 5 ermöglicht die Verschwenkung innerhalb der Aufnahmeöffnung 4. Die Aufnahmeöffnung 4 des Spannhebels 1 weist eine entsprechende Formgebung auf, um den Verbindungskopf 5 aufzunehmen. Insbesondere ist im Bereich, der mit der konvexen Außenkontur 37 in Kontakt steht, eine konkave Kontur vorgesehen. Die Aufnahmeöffnung 4 ist geringfügig größer ausgeführt als der Verbindungskopf 5, um eine Verschwenkung des Verbindungskopfs 5 innerhalb der Aufnahmeöffnung 4 zu erlauben. Die Gelenkachse liegt im Mittelpunkt eines Kreises, der durch die bevorzugt kreisbogenförmig ausgebildete konvexe Außenkontur 37 definiert ist. Ein zungenförmiger Bereich 31 des Spannhebels 1 ist derart geformt, dass der Verbindungskopf 5 in die Aufnahmeöffnung 4 eingeschwenkt werden kann, d.h., zum Einführen des L-förmigen Verbindungskopfes 5 wird zuerst ein Spitzenbereich 32 in die Gelenköffnung 4 eingeführt und dann der Gelenkkopf 3 zusammen mit dem daran anschließenden Dämpferkolben 13 entlang eines Bogens 33 in die Aufnahmeöffnung 4 eingeschwenkt. Dabei gleitet die konvexe Außenkontur 37 entlang der Verbindungspfanne 24. Alternativ kann der Spannhebel 1 auch eine entlang der Gelenkachse verlaufende Queröffnung haben, wodurch der Verbindungskopf 5 seitlich entlang der Gelenkachse eingeschoben werden kann. Zwischen einem Bereich des Verbindungskopfes 5 und dem Spannhebel 1 kann ein Sicherungselement 34 eingeschoben oder angebracht sein. Das Sicherungselement 34 kann sowohl als separates Bauelement als auch als integraler Bestandteil am Verbindungskopf 5 angeformt sein. Das Sicherungselement 34 dient zur Verrastung des Verbindungskopfes 5 in der Aufnahmeöffnung 4 oder als Verliersicherung. Die Verliersicherung 34 kann ausgebildet sein, um eine Vorspannung zwischen Verbindungskopf 5 und Spannhebel 1 hervorzurufen. Das Sicherungselement 34 kann in allen vorgestellten Ausführungsformen oder -varianten eingesetzt werden.

Allen zuvor vorgestellten Ausführungsbeispielen ist gemein, dass eine derartige Verbindung auch am ersten Endbereich 17 vorgesehen sein kann (in den Figuren nicht gezeigt). Der zweite Verbindungskopf kann dabei entsprechend dem ersten Verbindungskopf 5 gestaltet sein, wie es in den Figuren 1 bis 6 gezeigt ist. D.h., er kann beispielsweise ebenfalls aus einem Gelenklager und einer Gelenkkappe gebildet sein. Des Weiteren besteht die Möglichkeit, lediglich ein Gelenklager vorzusehen, das mit einem weiteren Element in Kontakt steht und mit diesem eine Gelenkverbindung bildet. Die Verbindungspfanne ist von einem anderen Element gebildet als vom Spannhebel, z.B. vom Motorblock oder einem Montageträger. Es besteht deshalb die Möglichkeit lediglich eine derartige Verbindung ausschließlich am ersten Endbereich 17 des Spannelements unter Schutz zu stellen. Es ist also möglich, dass die Spannvorrichtung lediglich am ersten Endbereich 17 einen Verbindungskopf aufweist. D.h., dass die Verbindung zwischen Spannhebel und Spannkolben auf bisher bekannte Weise erfolgt, etwa mittels eines Bolzens.

Der zweite Verbindungskopf 5 kann mit einer zweiten Verbindungspfanne in Kontakt stehen oder in diese eingebracht sein. Der Verbindungskopf kann dabei alle zuvor vorgestellten Ausformungen aufweisen und in eine zweite Aufnahmeöffnung eingesteckt oder eingeschoben sein. Die zweite Verbindungspfanne kann beispielsweise an einem Montageträger oder am Motorblock ausgeformt sein. Entsprechend zur ersten Aufnahmeöffnung 4 kann die zweite Aufnahmeöffnung dabei Randbereiche aufweisen, die den Verbindungskopf derart umfassen, dass ein selbstständiges Lösen nicht möglich ist. Alle zuvor gemachten Ausführungen zwischen der Verbindung des Spannhebels 1 mit dem Spannkolben 2 mittels des Verbindungskopfes 5 treffen auch auf die Verbindung zwischen dem zweiten Verbindungskopf und der zweiten Aufnahmeöffnung in Nähe des ersten Endbereichs 17 zu, wobei der Unterschied lediglich darin besteht, dass diese Verbindung am ersten Endbereich 17 erfolgt und es sich beim zu verbindendem Bauelement nicht um einen Spannhebel 1 handelt. Alle Wirkprinzipien oder vorgestellten Ausführungsformen sind jedoch auch auf diese Verbindung anwendbar. Es ist erfindungsgemäß möglich, sowohl am ersten Endbereich 17 und dem zweiten Endbereich 19 derartige Verbindungsköpfe vorzusehen, als auch lediglich an einem der beiden Endbereiche 17,19 einen einzigen derartigen Verbindungskopf vorzusehen.

## Patentansprüche

1. Spannvorrichtung für ein Endlostreibmittel, mit einem Spannhebel (1) und einem Spannkolben (2), wobei der Spannkolben (2) einen Verbindungskopf (5) aufweist, zwischen Spannhebel (1) und Spannkolben (2) mittels des Verbindungskopfes (5) eine verschwenkbare Gelenkverbindung ausgebildet ist,
**dadurch gekennzeichnet, dass**
der Spannhebel (1) eine Verbindungspfanne (24) aufweist,
die Verbindungspfanne (24) eine Aufnahmeöffnung (4) ausbildet und der Verbindungskopf (5) in der Aufnahmeöffnung (4) mittels der Verbindungspfanne (24) und mindestens einem an der Verbindungspfanne (24) ausgebildeten Randbereich (35) zumindest bereichsweise derart umgriffen ist,
dass der Verbindungskopf (5) gegen ein Trennen von der Verbindungspfanne (24) entgegen einer Wirkrichtung des Spannkolbens (2) gesichert ist.

2. Spannvorrichtung nach Anspruch 1, **dadurch gekennzeichnet, dass** die Wirkrichtung des Spannkolbens (2) in einer Längsachse (22) des Spannkolbens (2) verläuft und der Randbereich (35) einen Querschnitt der Aufnahmeöffnung (4) entlang der Längsachse (22) verengt und einen Hinterschnitt bildet, in dem der Verbindungskopf (5) zumindest bereichsweise aufgenommen ist.

3. Spannvorrichtung nach einem der vorhergehenden Ansprüche, **dadurch gekennzeichnet, dass** der Spannhebel (1) Befestigungsmittel zum schwenkbaren Befestigen an einem Montageträger aufweist.

4. Spannvorrichtung nach einem der vorhergehenden Ansprüche, **dadurch gekennzeichnet, dass** die Gelenkverbindung eine Gelenkkappe (25) und ein Gelenklager (3) mit einem in Längsachse (22) des Spannkolbens (2) im Wesentlichen kreisförmigen Querschnitt umfasst.

5. Spannvorrichtung nach Anspruch 4, **dadurch gekennzeichnet, dass** der Spannkolben (2) eine Feder (10) umfasst, welche sich mit einem Endbereich an der Gelenkkappe (25) abstützt.

6. Spannvorrichtung nach Anspruch 5, **dadurch gekennzeichnet, dass** die Aufnahmeöffnung (4) den im Wesentlichen kreisförmigen Querschnitt des Gelenklagers (3) bis mindestens über eine Äquatorebene (36) umfasst.

7. Spannvorrichtung nach einem der vorhergehenden Ansprüche, **dadurch gekennzeichnet, dass** der Verbindungskopf (5) in Verlauf der Längsachse (22) des Spannkolbens (2) in die Aufnahmeöffnung (4) eingebracht ist.

8. Spannvorrichtung nach Anspruch 7, **dadurch gekennzeichnet, dass** der Spannhebel (1) zumindest im Bereich der Verbindungspfanne (24) elastisch verformbar ausgestaltet ist.

9. Spannvorrichtung nach einem der Ansprüche 1 bis 3, **dadurch gekennzeichnet, dass** der Verbindungskopf (5) einen in Verlauf der Längsachse (22) des Spannkolbens (2) schwalbenschwanzförmig ausgebildeten Querschnitt aufweist.

10. Spannvorrichtung nach einem der Ansprüche 1 bis 3, **dadurch gekennzeichnet, dass** der Verbindungskopf (5) einen in Verlauf der Längsachse (22) des Spannkolbens (2) L-förmigen Querschnitt aufweist, wobei eine mittels des L-förmigen Querschnitts gebildete Zunge zumindest bereichsweise in die Aufnahmeöffnung (4) eingreift und den Randbereich (35) hintergreift.

11. Spannvorrichtung nach einem der vorhergehenden Ansprüche, **dadurch gekennzeichnet, dass** zwischen Spannhebel (1) und Verbindungskopf (5) ein Sicherungselement (34) positioniert ist, das eine Vorspannung zwischen Spannhebel (1) und Verbindungskopf (5) bewirkt.

12. Spannvorrichtung nach Anspruch 11, **dadurch gekennzeichnet, dass** das Sicherungselement (34) integral am Verbindungskopf (5) angeformt ist.

13. Spannvorrichtung nach einem der vorhergehenden Ansprüche, **dadurch gekennzeichnet, dass** an einem dem Verbindungskopf (5) abgewandten Endbereich des Spannkolbens (2) ein zweites Gelenklager (3) ausgebildet ist.

14. Spannvorrichtung nach Anspruch 13, **dadurch gekennzeichnet, dass** das zweite Gelenklager (3) ausgestaltet ist mittels eines Gelenkpartners ein verschwenkbares Gelenk zu bilden.

15. Zugmitteltrieb für einen Verbrennungsmotor umfassend ein Endlostreibmittel, mindestens zwei Treibmittelräder, die in einem vom Endlostreibmittel umschlossenen Bereich angeordnet sind und eine Spannvorrichtung nach einem der vorhergehenden Ansprüche.

## Claims

1. A tensioning device for an endless drive means, comprising a tensioning lever (1) and a tensioning piston (2), wherein
the tensioning piston (2) comprises a connection head (5), a pivotable joint connection is implemented between the tensioning lever (1) and the tensioning piston (2) by means of the connection head (5),
**characterized in that** the tensioning lever (1) comprises a connection socket (24), the connection socket (24) defines a reception opening (4), and, by means of the connection socket (24) and at least one boundary area (35) formed thereon, the connection head (5) is, at least in certain areas thereof, encompassed in the reception opening (4) in such a way that the connection head (5) is secured against separation from the connection socket (24) in a direction opposite to the direction of operation of the tensioning piston (2).

2. A tensioning device according to claim 1, **characterized in that** the direction of operation of the tensioning piston (2) extends along a longitudinal axis (22) of the tensioning piston (2), and that the boundary area (35) reduces the width of a cross-section the reception opening (4) along the longitudinal axis (22) and defines an undercut in which the connection head (5) is accommodated, at least with certain areas thereof.

3. A tensioning device according to one of the preceding claims, **characterized in that** the tensioning lever (1) is provided with fastening means for pivotable fastening to a mounting structure.

4. A tensioning device according to one of the preceding claims, **characterized in that** the joint connection comprises a joint cap (25) and a joint bearing (3) with a cross-section that is substantially circular in the direction of the longitudinal axis (22) of the tensioning piston (2).

5. A tensioning device according to claim 4, **characterized in that** the tensioning piston (2) comprises a spring (10) resting on the joint cap (25) with one end portion thereof.

6. A tensioning device according to claim 5, **characterized in that** the reception opening (4) encompasses the substantially circular cross-section of the joint bearing (3) at least up to and beyond an equatorial plane (36).

7. A tensioning device according to one of the preceding claims, **characterized in that** the connection head (5) is inserted in the reception opening (4) in the direction of the longitudinal axis (22) of the tensioning piston (2).

8. A tensioning device according to claim 7, **characterized in that**, at least in the area of the connection socket (24), the tensioning lever (1) is elastically deformable.

9. A tensioning device according to one of the claims 1 to 3, **characterized in that** the connection head (5) has a dovetail-shaped cross-section in the direction of the longitudinal axis (22) of the tensioning piston (2).

10. A tensioning device according to one of the claims 1 to 3, **characterized in that** the connection head (5) has an L-shaped cross-section in the direction of the longitudinal axis (22) of the tensioning piston (2), a tongue defined through said L-shaped cross-section engaging the reception opening (4), at least in certain areas thereof, and engaging behind the boundary area (35).

11. A tensioning device according to one of the preceding claims, **characterized in that** a retaining element (34) is positioned between the tensioning lever (1) and the connection head (5), said retaining element (34) causing the tensioning lever (1) and the connection head (5) to be in a biased condition.

12. A tensioning device according to claim 11, **characterized in that** the retaining element (34) is formed integrally with the connection head (5).

13. A tensioning device according to one of the preceding claims, **characterized in that** a second joint bearing (3) is formed on an end portion of the tensioning piston (2) facing away from the connection head (5).

14. A tensioning device according to claim 13, **characterized in that** the second joint bearing (3) is configured such that, together with a mating joint component, it defines a pivotable joint.

15. A traction drive for an internal combustion engine, comprising an endless drive means, at least two drive means wheels arranged in an area enclosed by the endless drive means, and a tensioning device according to one of the preceding claims.

## Revendications

1. Dispositif de tension pour un moyen d'entraînement sans fin, avec un levier de tension (1) et un piston de tension (2), étant précisé que le piston de tension (2) comporte une tête de liaison (5) et qu'entre le levier de tension (1) et le piston de tension (2), une liaison articulée pivotante est formée à l'aide de la tête de liaison (5),
**caractérisé en ce que** le levier de tension (1) comporte une cavité de liaison (24),
**en ce que** la cavité de liaison (24) forme une ouverture de réception (4), et
**en ce que** la tête de liaison (5) est enserrée au moins par zones dans l'ouverture de réception (4) à l'aide de la cavité de liaison (24) et d'au moins une zone de bordure (35) formée sur ladite cavité (24) de telle sorte
que la tête de liaison (5) est protégée contre une séparation de la cavité de liaison (24) à l'encontre d'un sens d'action du piston de tension (2).

2. Dispositif de tension selon la revendication 1, **caractérisé en ce que** le sens d'action du piston de tension (2) s'étend dans un axe longitudinal (22) du piston de tension (2), et la zone de bordure (35) rétrécit une section transversale de l'ouverture de réception (4) le long de l'axe longitudinal (22) et forme une contre-dépouille dans laquelle la tête de liaison (5) est logée au moins par zones.

3. Dispositif de tension selon l'une des revendications précédentes, **caractérisé en ce que** le levier de tension (1) comporte des moyens de fixation pour la fixation pivotante à un support de montage.

4. Dispositif de tension selon l'une des revendications précédentes, **caractérisé en ce que** la liaison articulée comprend un chapeau d'articulation (25) et un palier d'articulation (3) avec une section transversale globalement ronde dans l'axe longitudinal (22) du piston de tension (2).

5. Dispositif de tension selon la revendication 4, **caractérisé en ce que** le piston de tension (2) comprend un ressort (10) qui s'appuie avec une zone d'extrémité contre le chapeau d'articulation (25).

6. Dispositif de tension selon la revendication 5, **caractérisé en ce que** l'ouverture de réception (4) entoure la section transversale globalement ronde du palier d'articulation (3) jusqu'au-dessus, au moins, d'un plan équatorial (36).

7. Dispositif de tension selon l'une des revendications précédentes, **caractérisé en ce que** la tête de liaison (5) est introduite dans l'ouverture de réception (4) suivant l'axe longitudinal (22) du piston de tension (2).

8. Dispositif de tension selon la revendication 7, **caractérisé en ce que** le levier de tension (1) est conçu pour être élastiquement déformable au moins dans la zone de la cavité de liaison (24).

9. Dispositif de tension selon l'une des revendications 1 à 3, **caractérisé en ce que** la tête de liaison (5) présente une section transversale en queue d'aronde suivant l'axe longitudinal (22) du piston de tension (2).

10. Dispositif de tension selon l'une des revendications 1 à 3, **caractérisé en ce que** la tête de liaison (5) présente une section transversale en L suivant l'axe longitudinal (22) du piston de tension (2), étant précisé qu'une languette formée à l'aide de la section transversale en L entre au moins par zones dans l'ouverture de réception (4) et vient en prise par derrière avec la zone de bordure (35).

11. Dispositif de tension selon l'une des revendications précédentes, **caractérisé en ce qu'**il est prévu entre le levier de tension (1) et la tête de liaison (5) un élément de blocage (34) qui provoque une contrainte entre le levier de tension (1) et la tête de liaison (5).

12. Dispositif de tension selon la revendication 11, **caractérisé en ce que** l'élément de blocage (34) est rapporté d'une seule pièce sur la tête de liaison (5).

13. Dispositif de tension selon l'une des revendications précédentes, **caractérisé en ce qu'**un second palier d'articulation (3) est formé sur une zone d'extrémité du piston de tension (2) qui est opposée à la tête de liaison (5).

14. Dispositif de tension selon la revendication 13, **caractérisé en ce que** le second palier d'articulation (3) est conçu pour former avec un partenaire articulation une articulation pivotante.

15. Entraînement de moyen de traction pour un moteur à combustion interne, comprenant un moyen d'entraînement sans fin, au moins deux roues de moyen d'entraînement qui sont disposées dans une zone entourée par le moyen d'entraînement sans fin, et un dispositif de tension selon l'une des revendications précédentes.
